# EUROPÄISCHE PATENTSCHRIFT

(11) **EP 3 791 091 B1**
(45) Veröffentlichungstag und Bekanntmachung des Hinweises auf die Patenterteilung: **14.09.2022**
(21) Anmeldenummer: 19724742.2
(22) Anmeldetag: 25.04.2019
(51) Int. Cl.: F16H 57/033

(54) **STANDARDISIERTE MODULARE ANTRIEBSANORDNUNG**
STANDARDIZED MODULAR DRIVE ASSEMBLY
SYSTÈME D'ENTRAÎNEMENT MODULAIRE NORMALISÉ

(30) Priorität: 09.05.2018 AU 2018901580
(43) Veröffentlichungstag der Anmeldung: 17.03.2021
(73) Patentinhaber: SEW-EURODRIVE GmbH & Co. KG, 76646 Bruchsal (DE)
(72) Erfinder: BANASIK, Lech, Brighton East, VIC 3187 (AU)
(86) Internationale Anmeldenummer: PCT/EP2019/025129
(87) Internationale Veröffentlichungsnummer: WO 2019/214846

(56) Entgegenhaltungen:
- DE-A1-102005 031 197
- DE-A1-102016 001 853
- US-A- 2 596 794
- US-A- 3 588 009
- US-A- 5 160 113

## Beschreibung

Die vorliegende Erfindung betrifft standardisierte modulare Antriebsanordnungen für Industrieausrüstung, wie zum Beispiel Fördereinrichtungen.

Es ist allgemein bekannt, dass Antriebsanordnungen für Fördereinrichtungen einen Elektromotor und ein Getriebe aufweisen.

Aus der DE 10 2005 031197 A1 ist als nächstliegender Stand der Technik eine Motorschwinge mit Getriebemotor bekannt.

Aus der US 2 596 794 A ist eine Getriebebaureihe bekannt.

Aus der US 5 160 113 A ist eine Befestigung für Antriebsmittel bekannt.

Aus der DE 10 2016 001853 A1 ist ein Antriebspaket bekannt.

Der Erfindung liegt daher die Aufgabe zugrunde, eine Antriebsanordnung kostengünstig und einfach herstellbar zu gestalten.

Erfindungsgemäß wird die Aufgabe bei der Antriebsanordnung nach den in Anspruch 1 und bei der Fördereinrichtung nach den in Anspruch 11 angegebenen Merkmalen gelöst.

Wichtige Merkmale der Erfindung bei der Vorrichtung und ein Verfahren sind, dass

Von Vorteil ist dabei, dass die Erfindung bei Antriebsanordnungen für Fördereinrichtungen anwendbar ist, welche einen Elektromotor und ein Getriebe aufweisen, die durch eine Kupplung verbunden und auf einer einteiligen Grundplatte zusammen montiert sind. Insbesondere ist die Erfindung einsetzbar bei Antriebsanordnungen für Fördereinrichtungen, welche Zusatzkomponenten, wie zum Beispiel Bremsen, Schutzvorrichtungen, Drehmomentarme, aufweisen.

Mittels der modularen Lösung, welche die Erfindung darstellt, sind individuelle Antriebsanordnungen für Fördereinrichtungen mit verschiedenen maßgeschneiderten Spezifikationen herstellbar, um speziellen Kundenanforderungen gerecht zu werden. Individuelle Aufträge für kundenspezifische Antriebsanordnungen für Fördereinrichtungen, die einen hohen Entwicklungsaufwand, hohe Herstellungskosten und lange Vorlaufzeiten erfordern, sind erfindungsgemäß vermeidbar.

Die Erfindung ermöglicht also eine hohe Varianz unter Verwendung einer geringen Anzahl von Teilen, so dass also eine kostengünstige Herstellung ermöglicht ist.

Gemäß der vorliegenden Beschreibung wird eine standardisierte modulare Antriebsanordnung bereitgestellt, die Folgendes umfasst:
ein Getriebemodul, das ein auf einer Getriebegrundplatte montiertes Getriebe umfasst, wobei das Getriebe eine Ausgangswelle aufweist, die zur Ankopplung an eine Fördereinrichtungsriemenscheibenwelle ausgeführt ist, und
ein Motormodul, das einen auf einer Motorgrundplatte montierten Elektromotor umfasst, wobei die Motorgrundplatte mit der Getriebegrundplatte zusammenfügbar und austauschbar verbindbar ist, und wobei das Motormodul eine Drehmomentverbindung aufweist, die zur Ankopplung an eine Fördereinrichtungsstützstruktur ausgeführt ist.

Die Antriebsanordnung kann durch standardisierte Schnittstellenmaße L, W, H und D definiert sein, wobei:
L ein Abstand zwischen Vertikalebenen senkrecht zu der Antriebsanordnungsschwerpunktlinie durch Mitten der Drehmomentverbindung und der Ausgangswelle ist,
W ein Abstand zwischen Vertikalebenen senkrecht zu der Ausgangswellenschwerpunktlinie durch eine Mitte der Drehmomentverbindung und eine Endfläche der Ausgangswelle ist,
H ein Abstand zwischen Vertikalebenen durch die Ausgangswellenschwerpunktlinie und die Montagefläche der Drehmomentverbindung ist; und
D ein Durchmesser der Ausgangswelle des Getriebes ist.

Das Getriebe kann aus mehreren Getrieben, die entsprechende mehrere standardisierte Gangübersetzungen haben, ausgewählt sein.

Der Elektromotor kann aus mehreren Elektromotoren, die entsprechende mehrere standardisierte Abmessungen haben, ausgewählt sein.

Die standardisierte modulare Antriebsanordnung kann ferner eine Bremse umfassen, die zwischen einer Antriebswelle des Elektromotors und einer Eingangswelle des Getriebes angeordnet ist.

Die Drehmomentverbindung kann aus mehreren Drehmomentverbindungen, die standardisierte Abmessungen haben, ausgewählt sein.

Das Motormodul kann mittels sich teilweise überlappender, ausgesparter, vorragender Teile der Getriebegrundplatte und der Motorgrundplatte mit dem Getriebemodul zusammenfügbar und austauschbar verbindbar sein.

Die standardisierte modulare Antriebsanordnung kann eine Winkeltriebanordnung für eine Fördereinrichtung oder irgendeine andere Maschine, die eine Winkeltriebanordnung erfordert, sein.

Wichtige Merkmale bei der Antriebsanordnung gemäss der Erfindung sind, dass die Antriebsanordnung ein Getriebe, einen Motor, insbesondere Elektromotor, und eine Motorschwinge aufweist,

insbesondere wobei das Getriebe vom Motor direkt oder über eine Kupplung angetrieben wird,
wobei die Motorschwinge ein erstes und ein zweites Schwingenteil aufweist,
wobei das Getriebe auf dem ersten Schwingenteil befestigt ist,
wobei der Motor, insbesondere und die Kupplung, auf dem zweiten Schwingenteil befestigt ist, insbesondere sind,
insbesondere wobei das erste Schwingenteil die Getriebegrundplatte aufweist oder ist und wobei das zweite Schwingenteil die Motorgrundplatte aufweist oder ist.

Von Vorteil ist dabei, dass durch die Teilung der Motorschwinge und die somit geschaffene Schnittstelle einerseits ein modularer Aufbau und andererseits eine thermisch, elektrische und/oder schwingungsbezogene Entkopplung des Getriebes vom Motor erreichbar ist.

Erfindungsgemäss sind zwischen dem ersten und dem zweiten Schwingenteil mindestens ein Paar von Plattenteilen angeordnet,
wobei das erste Plattenteil des Paars mit dem ersten Schwingenteil verbunden, insbesondere schweißverbunden ist, und das zweite Plattenteil des Paars mit dem zweiten Schwingenteil verbunden, insbesondere schweißverbunden ist. Die Berührfläche zwischen erstem und zweiten Schwingenteil auf die Berührfläche der Plattenteile reduziert ist und somit ein hoher Druck, also Gewichtskraft pro Fläche, erzeugbar ist. Da somit eine sehr hohe Normalkraft erzeugt ist, ist eine leistungsfähige kraftschlüssige Verbindung erreicht. Denn die in axialer Richtung somit erzeugte Haftreibung ist von der auf die Berührflächen bezogene Normalkraft abhängig. Der hohe Druck bewirkt aber eine weitere Erhöhung der Haftreibung.

Bei einer vorteilhaften Ausgestaltung ragt ein Verbindungsmittel, wie Gewindestange oder Schraube, durch eine durch das Paar durchgehende Ausnehmung hindurch, insbesondere so dass eine Mutter und ein Schraubenkopf oder eine weitere Mutter die beiden Schwingenteile auf das jeweilige Paar drücken. Das erste Schwingenteil zum zweiten Schwingenteil hingedrückt wird und somit über die Plattenteile ein Kraftschluss zwischen dem ersten und dem zweiten Schwingenteil bewirkbar ist.

Bei einer vorteilhaften Ausgestaltung sind die Plattenteile, insbesondere mit Ausnahme der Ausnehmung, jeweils quaderförmig oder keilförmig geformt. Von Vorteil ist dabei, dass bei der quaderförmigen Ausführung eine Anpassung der auf die Motorschwinge bezogene Höhe des Motors relativ zum Getriebe mittels Dimensionierung der Plattenteile erreichbar ist und bei der keilförmigen Ausführung eine Verschiebung in axialer Richtung ein Einstellen dieser Höhe ausführbar ist.

Bei einer vorteilhaften Ausgestaltung fungieren die Plattenteile als Dämpfungselemente zum Dämpfen von Schwingungen,

insbesondere wobei jedes der Plattenteile aus einem Stapel von mit einem elastischen Material beschichteten Einzelblechen besteht. Von Vorteil ist dabei, dass die vom Motor erzeugten Schwingungsmoden nicht zum Getriebe geleitet werden. Vorzugsweise ist bei der Kupplung ein Zwischenteil vorgesehen, welches aus Kunststoff ist oder eine Kunststoffbeschichtung aufweist und zwischen der eintreibenden Welle des Getriebes und der Rotorwelle des Motors und/oder einer Kupplungswelle der Kupplung angeordnet ist. Somit erfolgt die Drehmomentdurchleitung vom Motor zum Getriebe über dieses Zwischenteil, welches als Dämpfungselement wirkt. Aber auch die Plattenteile wirken als Dämpfungselemente. Somit ist eine bezüglich Schwingungen wirksame Entkopplung von Motor und Getriebe erreichbar.

Bei einer vorteilhaften Ausgestaltung fungieren die Plattenteile als elektrische Isolatoren, wobei die Plattenteile das erste vom zweiten Schwingenteil elektrisch isolieren,
insbesondere wobei zwischen der Kupplung und der eintreibenden Welle des Getriebes ein elektrischer Isolator angeordnet ist, insbesondere zur elektrische Isolation zwischen dem Motor und dem Getriebe,
insbesondere wobei die Plattenteile aus einem elektrisch isolierenden Material gefertigt sind oder eine Beschichtung aus einem elektrischen isolierenden Material aufweisen. Von Vorteil ist dabei, dass Korrosion vermindert ist. Denn Aufladungen, die im Bereich der schnell drehenden Rotorwelle des Motors entstehen sind vom Getriebe ferngehalten und daher auch entsprechende elektrische Ausgleichsströme im Beriech des Getriebes vermieden.

Bei einer vorteilhaften Ausgestaltung überlappt der vom ersten Schwingenteil in axialer Richtung überdeckte Bereich mit dem vom zweiten Schwingenteil in axialer Richtung überdeckten Bereich oder ist von ihm umfasst,
wobei der vom ersten Schwingenteil in Normalenrichtung überdeckte Bereich mit dem vom zweiten Schwingenteil in Normalenrichtung überdeckten Bereich überlappt oder von ihm umfasst ist,
insbesondere wobei die axiale Richtung parallel zur Drehachse der Rotorwelle des Motors und/oder parallel zur Drehachse der eintreibenden Welle des Getriebes ist,
insbesondere wobei die Normalenrichtung parallel zur Normalen der die Paare von Plattenteilen enthaltenden Ebene ausgerichtet ist und/oder wobei die Normalenrichtung parallel zur Normalen der die Berührfläche zwischen dem ersten und dem zweiten Plattenteil eines jeweiligen Paares enthaltenden Ebene ausgerichtet ist. Von Vorteil ist dabei, dass die Verbindungsebene zwischen dem ersten und dem zweiten Schwingenteil in Normalenrichtung und in axialer Richtung in dem vom ersten Schwingenteil überdeckten jeweiligen Bereich angeordnet ist. Somit ist eine erhöhte Stabilität erreichbar.

Bei einer vorteilhaften Ausgestaltung weist **das erste Schwingenteil** eine obere Platte und eine zur oberen Platte parallel ausgerichtete, von der oberen Platte beabstandete, untere Platte auf,
wobei eine Tragplatte zwischen der oberen und der unteren Platte angeordnet ist und die tragplatte mit der oberen und der unteren Platte verbunden, insbesondere schweißverbunden, ist,
insbesondere wobei Frontplatten und/oder Stege jeweils mit der oberen Platte, der unteren Platte und der Tragplatte verbunden, insbesondere schweißverbunden, sind. Von Vorteil ist dabei, dass das zweite Schwingenteil eine sehr hohe Steifigkeit aufweist.

Bei einer vorteilhaften Ausgestaltung weist das erste Schwingenteil einen Hohlraum auf, welcher mit Getriebeöl zumindest teilweise befüllt ist, wobei eine Ölleitung vom Hohlraum zum Innenraum des Getriebes, insbesondere über eine Pumpe, führt und wobei eine Ölleitung vom Innenraum des Getriebes zum Hohlraum führt.
wobei die Plattenteile als Wärmesperre ausgebildet sind, insbesondere so dass der vom Motor erzeugte Wärmestrom zwar mittels des zweiten Schwingenteils aufspreizbar ist, aber vom ersten Schwingenteil ferngehalten ist. Von Vorteil ist dabei, dass eine verbesserte Wärmeabfuhr und somit die Antriebsanordnung bei kompakter Ausführung eine möglichst hohe Leistung erzeugt.

Bei einer vorteilhaften Ausgestaltung weist **das zweite Schwingenteil** eine obere Platte und eine zur oberen Platte parallel ausgerichtete, von der oberen Platte beabstandete, untere Platte auf,
wobei eine Tragplatte zwischen der oberen und der unteren Platte angeordnet ist und die tragplatte mit der oberen und der unteren Platte verbunden, insbesondere schweißverbunden, ist,
insbesondere wobei Frontplatten und/oder Stege jeweils mit der oberen Platte, der unteren Platte und der Tragplatte verbunden, insbesondere schweißverbunden, sind. Von Vorteil ist dabei, dass das zweite Schwingenteil eine sehr hohe Steifigkeit aufweist.

Wichtige Merkmale bei der Fördereinrichtung sind, dass die Fördereinrichtung eine vorgenannte Antriebsanordnung umfasst. Von Vorteil ist dabei, dass durch den modularen Aufbau eine auf die Anforderungen der von der Antriebsanordnung anzutreibenden Last abgestimmte Kombination von Motor und Getriebe verwendbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
Figur 1 zeigt eine perspektivische Ansicht einer beispielhaften standardisierten modularen Antriebsanordnung gemäß einem Ausführungsbeispiel der vorliegenden Erfindung.
Figur 2 und Figur 3 zeigen Seitenansichten standardisierter modularer Antriebsanordnungen gemäß zwei Ausführungsbeispielen der vorliegenden Erfindung.
Figur 4 zeigt eine perspektivische Ansicht eines beispielhaften Motormoduls, das in den standardisierten modularen Antriebsanordnungen der Figuren 2 und 3 implementierbar ist, gemäß einem Ausführungsbeispiel der vorliegenden Erfindung.
Figur 5 zeigt eine perspektivische Ansicht eines beispielhaften Getriebemoduls, das in den standardisierten modularen Antriebsanordnungen der Figuren 2 und 3 implementierbar ist, gemäß einem Ausführungsbeispiel der vorliegenden Erfindung.
Figur 6 zeigt eine perspektivische Ansicht einer beispielhaften zusammengefügten standardisierten modularen Antriebsanordnung gemäß einem Ausführungsbeispiel der vorliegenden Erfindung.
Figur 7 zeigt eine Schrägansicht einer weiteren beispielhaften Antriebsanordnung.
Figur 8 zeigt eine zugehörige Seitenansicht mit einer ungeschützten Kupplung 91.
Figur 9 zeigt eine zugehörige Seitenansicht mit einer geschützten Kupplung 91.

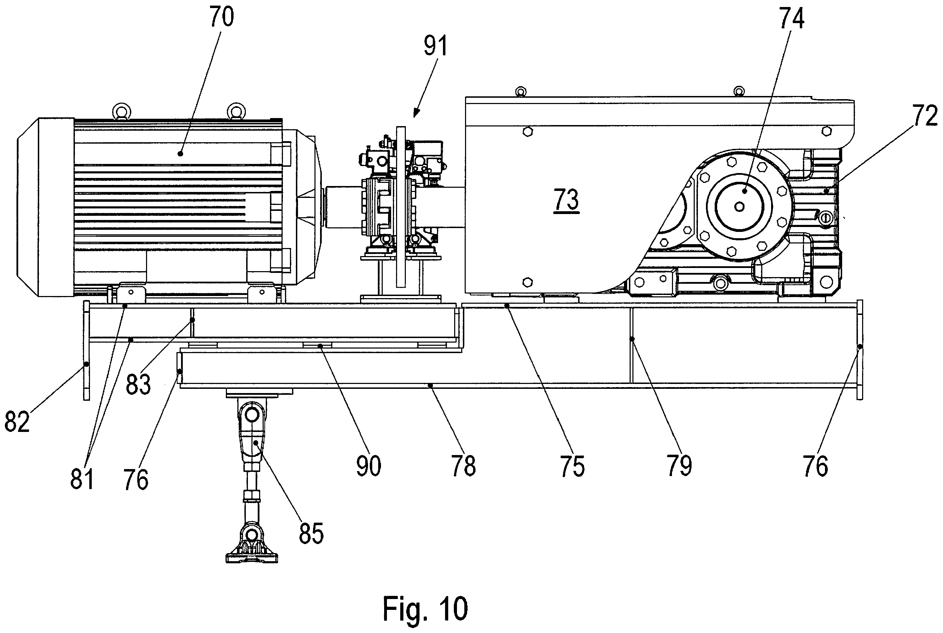

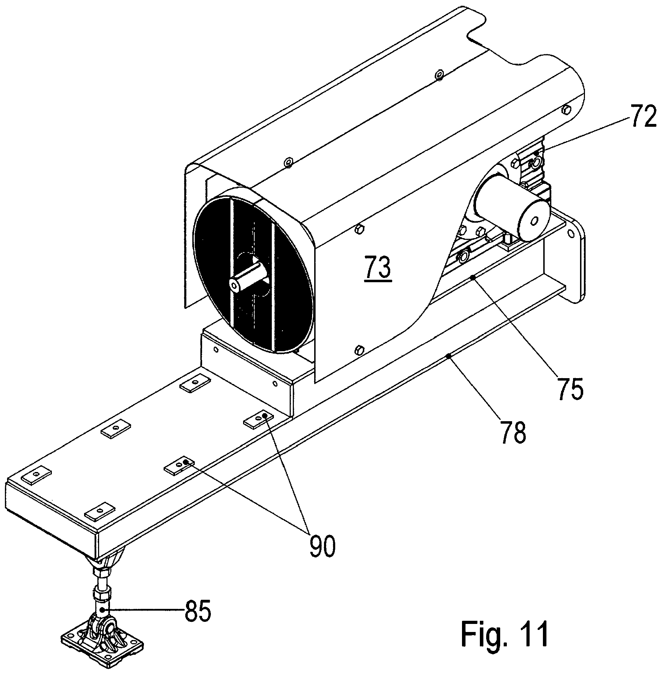

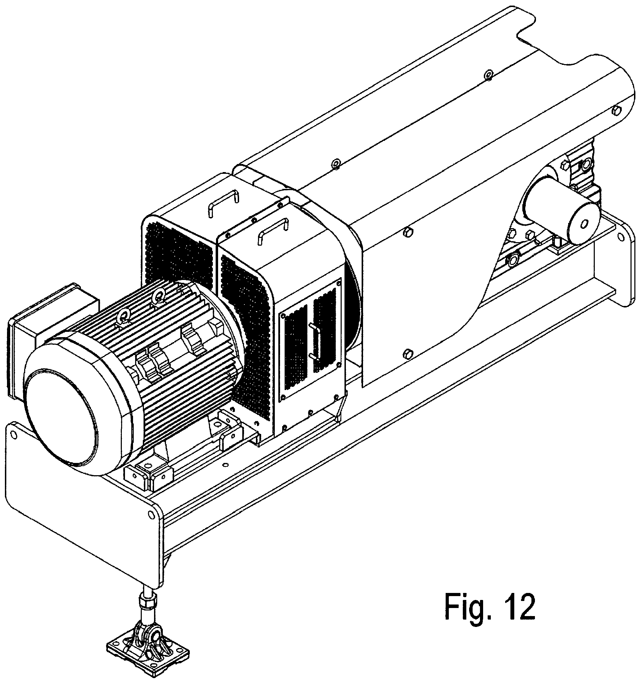

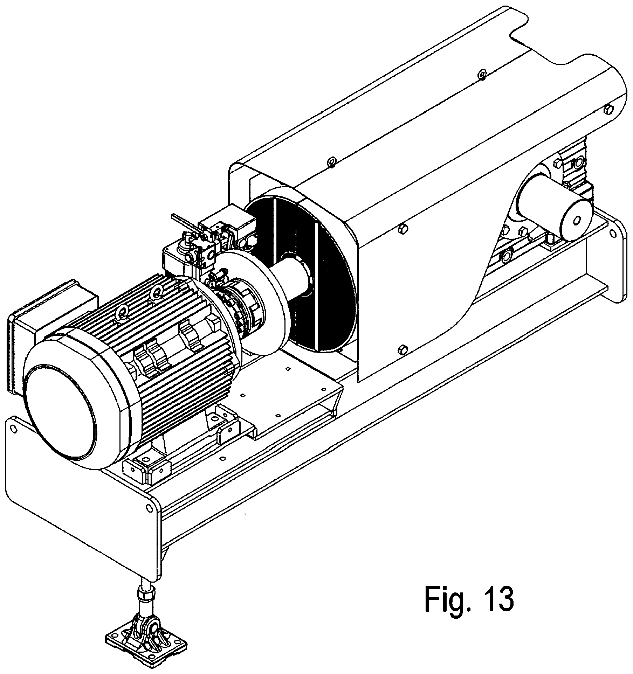

Figur 10 zeigt eine zugehörige Seitenansicht mit einer ungeschützten Kupplung 91, wobei ein anderer Motor 70 verwendet ist.

Wie in den Figuren dargestellt, kann eine standardisierte modulare Antriebsanordnung 10 gemäß einem Ausführungsbeispiel der vorliegenden Erfindung allgemein ein Getriebemodul 20 und ein Motormodul 30 umfassen. Die standardisierte modulare Antriebsanordnung 10 kann zum Beispiel eine Winkeltriebanordnung für einen Bandförderer (nicht gezeigt) sein. Das Getriebemodul 20 kann ein Getriebe 22 umfassen, das auf einer Getriebegrundplatte 24 montiert ist. Das Getriebe 22 kann eine rechtwinklige Ausgangswelle 26 aufweisen, die zur Ankopplung an eine Fördereinrichtungsriemenscheibenwelle (nicht gezeigt) des Bandförderers ausgeführt ist. Die Getriebegrundplatte 24 kann eine Drehmomentarmhalterung 28 aufweisen, die zur Ankopplung an eine Fördereinrichtungsstützstruktur (nicht gezeigt) des Bandförderers ausgeführt ist. Das Getriebe 22 kann ein kompaktes einstufiges Getriebe mit standardisierten Gangübersetzungen sein. Geeignete Getriebe 24 können X3KR140-, X3KR160-, X3KR180-, X3KR200- und X3KR220-Getriebe sein, die von SEW-Eurodrive erhältlich sind.

Das Motormodul 30 kann einen auf einer Motorgrundplatte 34 montierten Elektromotor 32 umfassen. Der Motoradapter 34 kann mit der Getriebegrundplatte 24 zusammenfügbar und austauschbar verbindbar sein. Der Motoradapter 34 kann zum Beispiel mittels zumindest teilweisen Überlappens eines ausgesparten, vorragenden Teils der Getriebegrundplatte 24 mit der Getriebegrundplatte 34 zusammenfügbar und austauschbar verbindbar sein. Der Elektromotor 32 kann ein fußbefestigter Elektromotor oder ein flanschbefestigter Elektromotor sein. Der Elektromotor 32 kann ein Wechselstrom-Elektromotor oder ein Gleichstrom-Elektromotor sein. Der Elektromotor 32 kann durch standardisierte Abmessungen und Leistungsbereiche, zum Beispiel IEC- oder NEMA- standardisierte Abmessungen und Leistungsbereiche, definiert sein.

Das Getriebemodul 20 kann durch standardisierte Schnittstellenmaße L, W, H und D definiert werden, wobei L ein Abstand zwischen einer vertikalen Mittellinie der Drehmomentarmhalterung 28 und einer Längsmittellinie der rechtwinkligen Ausgangswelle 26 ist. W kann ein Abstand zwischen einer Längsmittellinie des Getriebes 22 und einer Endfläche der rechtwinkligen Ausgangswelle 26 sein. H kann ein Abstand zwischen einer horizontalen Mittellinie einer Unterseite der Getriebegrundplatte 24 und der Längsmittellinie der rechtwinkligen Ausgangswelle 26 sein. D kann ein Durchmesser der rechtwinkligen Ausgangswelle 26 sein.

Das Getriebe 22 kann aus mehreren Getrieben 22, die entsprechende mehrere standardisierte Gangübersetzungen haben, ausgewählt sein. Die mehreren Getriebe 22 können zwischen zwei und zehn voneinander verschiedene Getriebe 22, zum Beispiel fünf voneinander verschiedene Getriebe 22, sein.

Analog dazu kann der Elektromotor 32 aus mehreren Elektromotoren 32, die entsprechende mehrere standardisierte Abmessungen und Leistungsbereiche haben, ausgewählt sein. Die mehreren Elektromotoren 32 können zwischen zwei und zehn voneinander verschiedene Elektromotoren 32, zum Beispiel sechs voneinander verschiedene Elektromotoren 32, sein.

Die standardisierte modulare Antriebsanordnung 10 kann ferner eine Bremse 40 umfassen, die zwischen einer Antriebswelle des Elektromotors 32 und einer Eingangswelle des Getriebes 22 angeordnet ist. Die Bremse 40 kann aus mehreren Bremsen 40, die standardisierte Abmessungen und Nennwerte haben, ausgewählt sein. Die mehreren Bremsen 40 können zwischen zwei und zehn voneinander verschiedene Bremsen 40, zum Beispiel drei voneinander verschiedene Bremsen 40, sein. Die Bremse 40 kann zum Beispiel eine elektrohydraulische Bremse oder eine hydraulische Bremse sein.

Die standardisierte modulare Antriebsanordnung 10 kann ferner eine Drehmomentverbindung 50 umfassen, die zum Verbinden der Drehmomentarmhalterung 28 der Getriebegrundplatte 22 mit der Fördereinrichtungsstützstruktur ausgeführt ist. Die Drehmomentverbindung 50 kann aus mehreren Drehmomentverbindungen 50, die standardisierte Abmessungen und Nennwerte haben, ausgewählt sein. Die mehreren Drehmomentverbindungen 50 können zwischen zwei und zehn voneinander verschiedene Drehmomentverbindungen 50, zum Beispiel drei voneinander verschiedene Drehmomentverbindungen 50, sein. Die Drehmomentverbindung 50 kann zum Beispiel eine Bellevillefeder oder ein Drehmomentarm sein.

Ausführungsbeispiele der Erfindung können eine große Anzahl von aus einer geringen Anzahl von gelagerten Getriebegrundplatten 22 und Motorgrundplatten 32 herzustellenden möglichen standardisierten modularen Antriebsanordnungen 10 ermöglichen. Zum Beispiel können bis zu 39 verschiedene Konfigurationen standardisierter modularer Antriebsanordnungen 10 hergestellt werden, wobei fünf standardisierte Getriebemodule 20, sechs standardisierte Motormodule 30, drei standardisierte Bremsen 40 und drei standardisierte Drehmomentverbindungen 50 vorhanden sind. Eine Standardisierung funktionaler Module der standardisierten modularen Antriebsanordnungen 10 kann wiederum eine Standardisierung anderer Zusatzkomponenten, wie zum Beispiel von Schutzvorrichtungen 60, gestatten. Ferner können die standardisierten Schnittstellenmaße L, W, H und D eine große Anzahl möglicher standardisierter modularer Antriebsanordnungen 10 zur Ankopplung an verschiedenste Fördereinrichtungen ermöglichen.

Ausführungsformen der vorliegenden Erfindung stellen standardisierte modulare Antriebsanordnungen bereit, die sowohl allgemein als auch speziell für den Antrieb von industrieller Ausrüstung, wie zum Beispiel Fördereinrichtungen, nützlich sind. Die standardisierten Schnittstellenmaße, modularen Komponenten und Verbindungen gestatten die leichte Konfiguration von standardisierten modularen Antriebsanordnungen für eine Vielzahl verschiedener Kundenanforderungen bei erheblicher Reduzierung der Herstellungskosten und Vorlaufzeiten im Vergleich zu herkömmlichen kundenspezifischen Antriebsanordnungen für Fördereinrichtungen.

Für den Zweck der vorliegenden Patentschrift bedeutet der Ausdruck "umfassend" "enthaltend, aber nicht darauf beschränkt", und der Ausdruck "umfasst" hat eine entsprechende Bedeutung.

Die obigen Ausführungsformen sind rein beispielhaft beschrieben worden, und es sind Modifikationen innerhalb des Schutzumfangs der folgenden Ansprüche möglich.

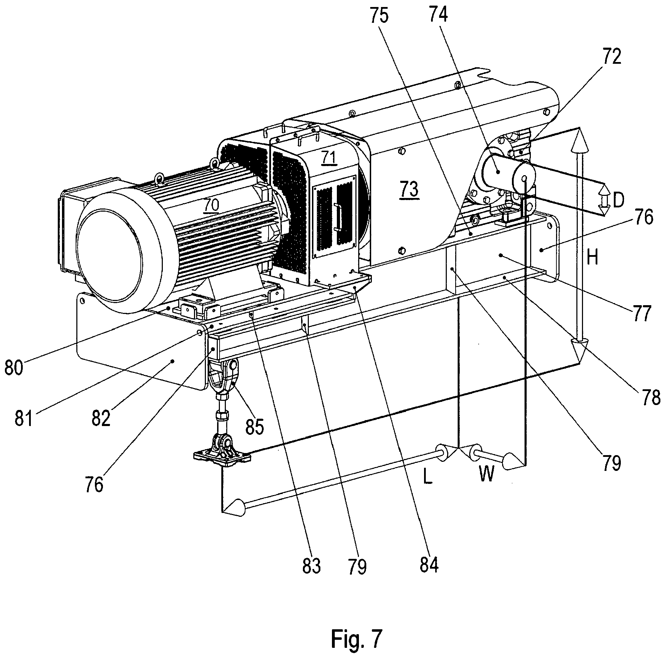

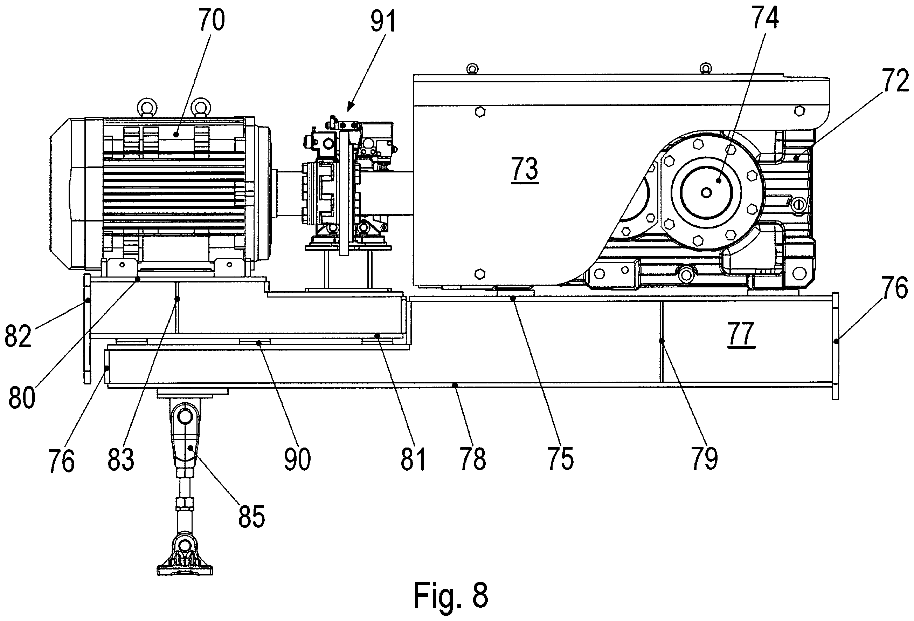

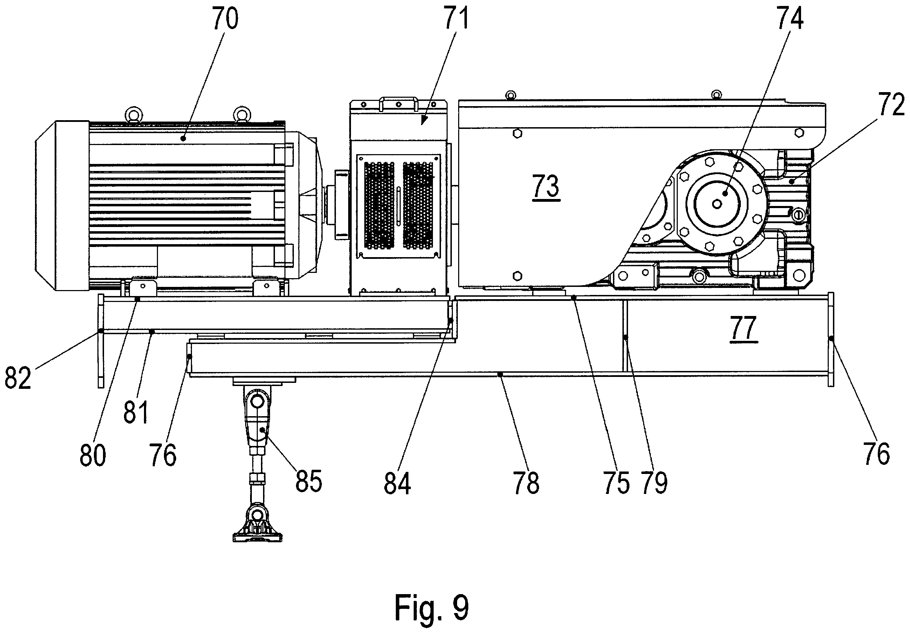

Wie in den Figuren 7 bis 9 dargestellt, treibt ein Motor 70, insbesondere Elektromotor, die eintreibende Welle eines Getriebes 72 über eine mit einem Berührschutz 71 geschützte Kupplung 91 an. Die abtreibende Welle 74 des Getriebes 74 ist senkrecht zur eintreibenden Welle ausgerichtet, da die eintreibende Getriebestufe des Getriebes 72 eine Winkelgetriebestufe ist und die weiteren Getriebestufen Parallelwellenstufen, also Stirnradgetriebestufen.

Ein Lüfter ist mit der eintreibenden Welle drehfest verbunden und der vom Lüfter geförderte Luftstrom wird von einer Lüfterhaube 73 entlang der Oberfläche des Gehäuses des Getriebes 72 geleitet, so dass eine effiziente Kühlung erreichbar ist.

Der Motor 70 samt Kupplung 91 und Getriebe 72 ist auf einer zweigeteilt ausgeführten Motorschwinge angeordnet.

Die Motorschwinge umfasst dabei ein erstes Schwingenteil und ein zweites Schwingenteil.

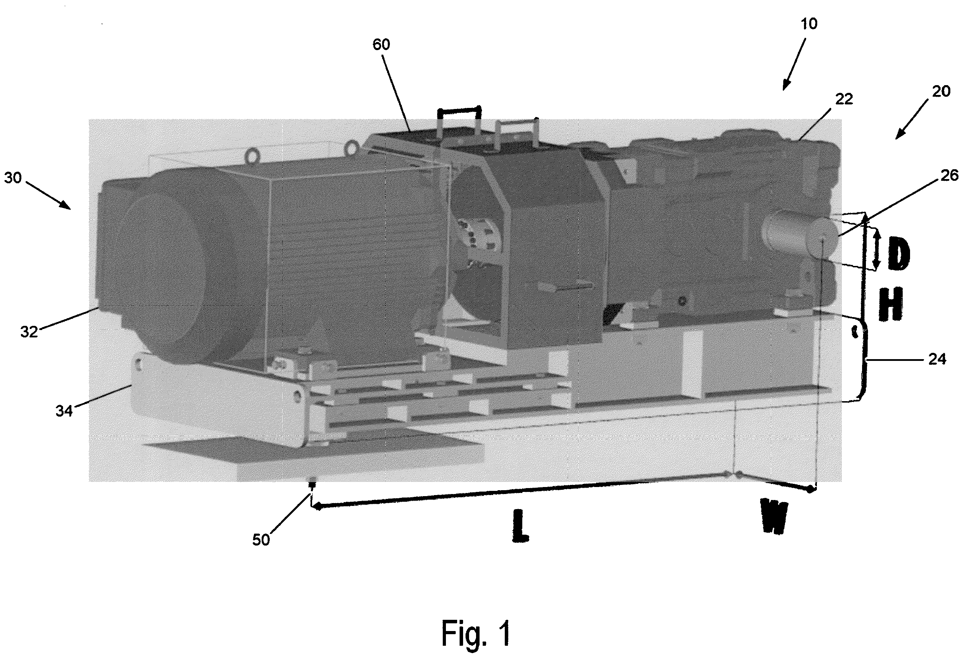

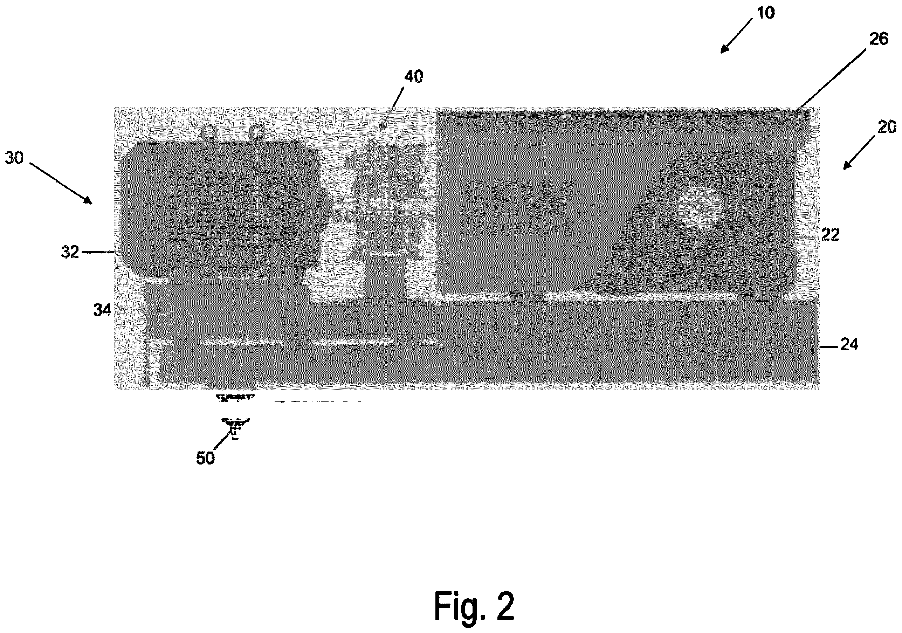

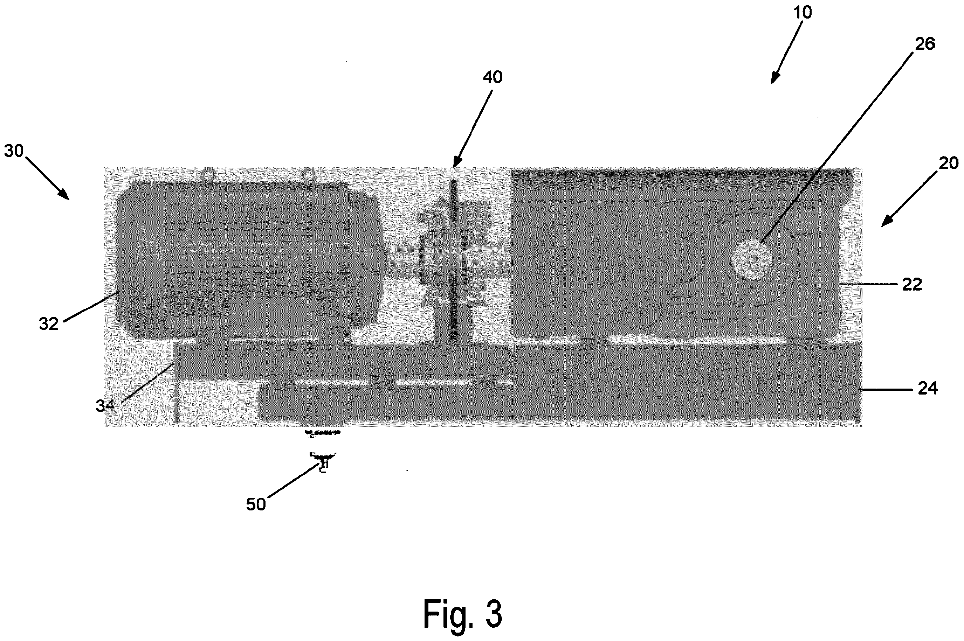

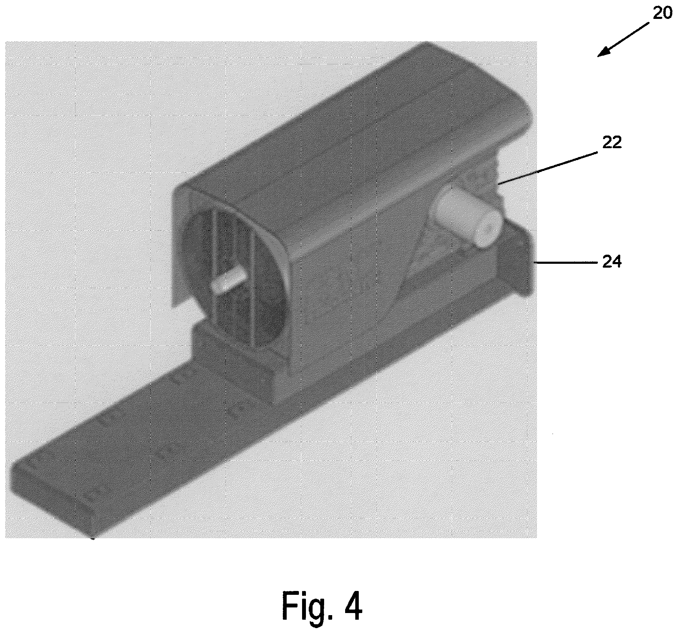

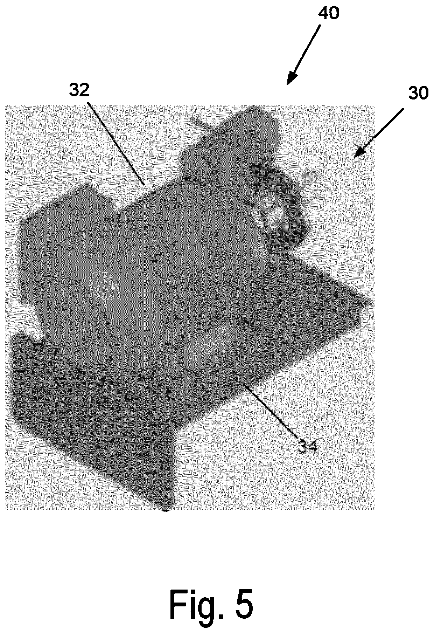

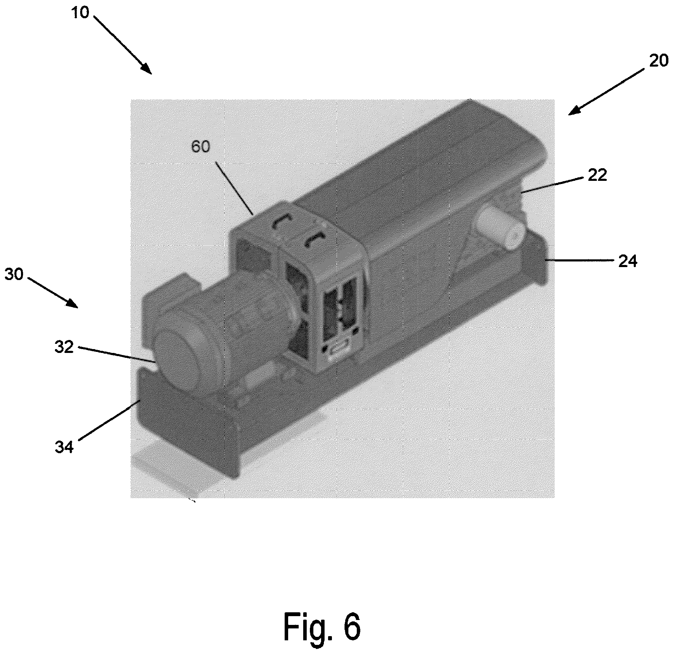

Auf dem ersten Schwingenteil ist das Getriebe 72 angeordnet und befestigt. Das erste Schwingenteil, insbesondere welche der Getriebegrundplatte 24 nach den Figuren 1 bis 6 entspricht, ist aus einer oberen Platte 75 und einer unteren Platte 78 zusammengesetzt. Die obere Platte 75 weist eine Stufe auf, welche zwei zueinander parallel ausgerichtete Plattenbereiche verbindet.

Der erste dieser beiden Plattenberieche fungiert als Aufstellfläche und Verbindungsfläche für das Getriebe 72 und der zweite dieser beiden Plattenbereiche fungiert als Verbindungsfläche zum zweiten Schwingenteil, insbesondere welche der Motorgrundplatte 34 nach den Figuren 1 bis 6 entspricht, hin.

Eine von der oberen Platte 75 beabstandete untere Platte 78 ist parallel ausgerichtet zur oberen Platte 75, insbesondere zu den beiden Plattenberiechen.

Zwischen der oberen Platte 75 und der unteren Platte 78 ist eine Tragplatte 77 angeordnet, welche mit sowohl mit der oberen Platte 75 als auch mit der unteren Platte 78 verbunden, insbesondere schweißverbunden ist.

Die Tragplatte 77 ist senkrecht zu der oberen Platte 75 und zu der unteren Platte 78 ausgerichtet.

Zur Versteifung sind Stege 79 mit der Tragplatte 77 und sowohl mit der oberen Platte 75 als auch mit der unteren Platte 78 verbunden, insbesondere schweißverbunden.

Zur weitere Versteifung sind Frontplatten 76 mit der Tragplatte 77 verbunden und sowohl mit der oberen Platte 75 als auch mit der unteren Platte 78 verbunden, insbesondere schweißverbunden. Dabei sind die Frontplatten 76 nicht nur zur Tragplatte 77 senkrecht ausgerichtet, sondern auch zur oberen Platte 75 und zur unteren Platte 78

An der Verbindungsfläche des zweiten Plattenbereichs des ersten Schwingenteils sind Distanzplatten 90 angeordnet, welche an der Verbindungsfläche befestigt sind. Die Distanzplatten 90 bilden ein Muster von regelmäßig zueinander beabstandeten Distanzplatten 90 und sind mit diesem oberen Plattenbereich verbunden, insbesondere schweißverbunden.

Ein ebensolches Muster von weiteren Distanzplatten 90 ist an der der Verbindungsfläche zugewandten Seite einer unteren Platte 81 der Motorgrundplatte 34 angeordnet und mit dieser verbunden, insbesondere schweißverbunden.

Mittels Stegen 83 und einer weiteren Tragplatte ist die untere Platte 81 des zweiten Schwingenteils mit der oberen Platte 80 des zweiten Schwingenteils verbunden, wobei Frontplatten 82 und Stege 83 jeweils sowohl mit der unteren Platte 81 als auch mit der oberen Platte 80 verbunden, insbesondere schweißverbunden, sind.

Auf der oberen Platte der zweiten Schwingenteil ist der Motor 70 angeordnet.

Somit sind die Distanzplatten 90 jeweils als Paar ausgebildet, wobei eine erste Distanzplatte 90 des jeweiligen Paars mit der oberen Platte 75 des ersten Schwingenteils und die zweite Distanzplatte 90 des jeweiligen Paares mit der unteren Platte 81 des zweiten Schwingenteils aneinander anliegen und jeweils ein in Normalenrichtung der ebenen Verbindungsfläche gerichtet durchgehendes Loch aufweisen, durch welches eine Schraube oder Gewindestange hindurch geführt ist zur Verbindung der beiden Schwingenteile.

Die untere Platte 78 des zweiten Schwingenteils ist über die Drehmomentstütze 85 mit dem Boden der Anlage verbindbar, in welcher die Antriebsanordnung, insbesondere der Getriebemotor, aufgestellt wird.

Mit Ausnahme des durchgehenden Lochs ist jedes der Plattenteile 90 quaderförmig.

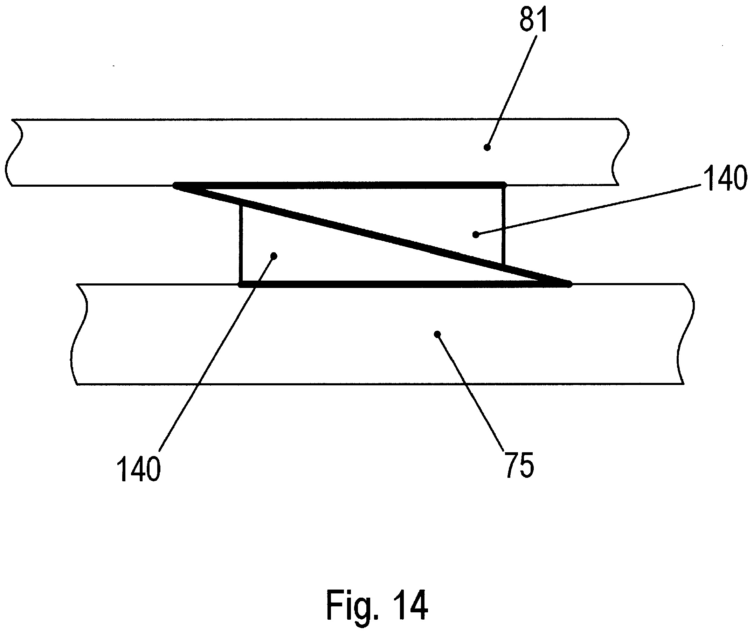

Wie in Figur 14 skizziert werden bei weiteren erfindungsgemäßen Ausführungsbeispielen statt der quaderförmigen Plattenteile 90 keilförmige Plattenteile 140 mit einer Schräge verwendet, insbesondere also als Keil ausgeführt. Vorzugsweise weist jedes dieser Plattenteile 140 einen trapezförmigen Querschnitt auf. Die schrägen Flächen der beiden Plattenteile 140 eines jeweiligen Paares liegen aneinander, so dass die jeweiligen Berührflächen beider Plattenteile 140 zu der unteren Platte 81 beziehungsweise zu der oberen Platte 75 hin parallel zueinander ausgerichtet sind.

Durch Verschieben des zweiten Schwingenteils relativ zum ersten Schwingenteil ist somit die Höhe einstellbar und es kann auf Passscheiben verzichtet werden, wenn genügend axiales Spiel beim Verbinden der eintreibenden Welle des Getriebes 72 mit der Kupplung 91 vorhanden ist.

Bei weiteren erfindungsgemäßen Ausführungsbeispielen werden die Plattenteile (90, 140) zur Dämpfung von Schwingungen geeignet ausgeführt. Hierbei eignet sich auch die Ausführung der Plattenteile (90, 149) aus einem Verbundmaterial. Vorzugsweise wird jedes der Plattenteile (90,140) aus einem Blechstapel, also aus einem Stapel von Einzelblechen, ausgeführt, wobei jedes Einzelblechen mindestens einer seiner beiden Seiten vorzugsweise mit einer Kunststoffschicht oder einem anderen elastischen Material beschichtet ist.

Es sind auch anders ausgeführte Dämpfungselemente zwischen den beiden Schwingenteilen anordenbar. Die zweigeteilte Ausführung der Motorschwingung ermöglicht hierbei, spezifische Schwingungsmoden abzudämpfen.

Bei weiteren erfindungsgemäßen Ausführungsbeispielen fungieren die Plattenteile (90, 140) als Wärmesperre, so dass der vom Motor erzeugte Wärmestrom zwar mittels des zweiten Schwingenteils aufspreizbar ist, aber vom ersten Schwingenteil ferngehalten ist. Dabei weist das erste Schwingenteil einen als Ölreservoir ausgebildete Hohlraum auf, welcher mit Getriebeöl zumindest teilweise befüllt ist, wobei eine Ölleitung vom Hohlraum zum Innenraum des Getriebes, insbesondere über eine Pumpe, führt und wobei eine Ölleitung vom Innenraum des Getriebes zum Hohlraum führt. Somit ist das Öl im Betrieb aus dem Getriebe in das erste Schwingenteil herausleitbar und kann dort beruhigt, also entschäumt, werden. Außerdem fließt Wärme an die Umgebung ab. Das beruhigte und gekühlte Öl wird dann von der Pumpe wieder ins Getriebe gefördert und trägt zur Kühlung des Getriebes bei.

Durch die zweigeteilte Ausführung der Motorschwinge ist die vom Motor erzeugte Wärme vom ersten Schwingenteil fernhaltbar. Jedoch dient die zweite Schwingenteil zur Aufspreizung des vom Motor erzeugten Wärmestroms bei und verbessert die Wärmeabfuhr an die Umgebung.

### Bezugszeichenliste

10 modulare Antriebsanordnung
20 Getriebemodul
22 Getriebe
24 Getriebegrundplatte
26 Ausgangswelle
28 Drehmomentarmhalterung, insbesondere Drehmomentstütze
30 Motormodul
32 Elektromotor
34 Motorgrundplatte
40 Bremse
50 Drehmomentverbindung
60 Schutzvorrichtungen
70 Motor, insbesondere Elektromotor
71 Berührschutz
72 Getriebe
73 Lüfterhaube
74 abtreibende Welle
75 obere Platte der Getriebegrundplatte 24
76 Frontplatte
77 Tragplatte
78 untere Platte der Getriebegrundplatte 24
79 Steg
80 obere Platte der Motorgrundplatte 34
81 untere Platte der Motorgrundplatte 34
82 Frontplatte
83 Steg
84 Frontplatte
85 Drehmomentstütze
90 Distanzplatte
91 Kupplung
140 Distanzplatte, keilförmig

## Patentansprüche

1. Antriebsanordnung (10),
wobei die Antriebsanordnung (10) ein Getriebe (22, 72), einen Elektromotor (32) und eine Motorschwinge aufweist,
wobei das Getriebe (22, 72) vom Motor direkt oder über eine Kupplung (91) angetrieben wird,
wobei die Motorschwinge ein erstes und ein zweites Schwingenteil aufweist,
wobei das Getriebe (22, 72) auf dem ersten Schwingenteil befestigt ist,
wobei der Motor (32) und die Kupplung (91) auf dem zweiten Schwingenteil befestigt sind,
**dadurch gekennzeichnet, dass** zwischen dem ersten und dem zweiten Schwingenteil Paare von Plattenteilen angeordnet sind,
wobei das erste Plattenteil des jeweiligen Paars mit dem ersten Schwingenteil verbunden ist, und das zweite Plattenteil des jeweiligen Paars mit dem zweiten Schwingenteil verbunden, ist,
die dem jeweils zweiten Plattenteil des jeweiligen Paars zugewandte Oberfläche des jeweiligen ersten Plattenteils des jeweiligen Paars in einer gemeinsamen Ebene liegen.

2. Antriebsanordnung (10) nach Anspruch 1,
**dadurch gekennzeichnet, dass**
die in der Ebene liegenden Oberflächen des jeweiligen Plattenteils gemeinsam durch ein Fräswerkzeug bearbeitet sind.

3. Antriebsanordnung (10) nach einem der vorangegangenen Ansprüche,
**dadurch gekennzeichnet, dass**
ein Verbindungsmittel, wie Gewindestange, Schraube oder dergleichen, durch eine durch das Paar durchgehende Ausnehmung hindurchragt, so dass eine Mutter und ein Schraubenkopf oder eine weitere Mutter die beiden Schwingenteile auf das jeweilige Paar drücken,
und/oder dass
die Plattenteile, , jeweils
- quaderförmig, zur Bildung einer von einem Fräswerkzeug bearbeitbaren Ebene, oder
- keilförmig geformt sind, zur Höhenjustierung durch relatives ebenes Verschieben der beiden Schwingenteile zueinander.

4. Antriebsanordnung (10) nach einem der vorangegangenen Ansprüche,
**dadurch gekennzeichnet, dass**
die Plattenteile als Dämpfungselemente zum Dämpfen von Schwingungen fungieren,
wobei jedes der Plattenteile aus einem Stapel von mit einem elastischen Material beschichteten Einzelblechen besteht.

5. Antriebsanordnung (10) nach einem der vorangegangenen Ansprüche,
**dadurch gekennzeichnet, dass**
die Plattenteile als elektrische Isolatoren fungieren, wobei die Plattenteile das erste vom zweiten Schwingenteil elektrisch isolieren,

6. Antriebsanordnung (10) nach einem der vorangegangenen Ansprüche,
**dadurch gekennzeichnet, dass**
der vom ersten Schwingenteil in axialer Richtung überdeckte Bereich mit dem vom zweiten Schwingenteil in axialer Richtung überdeckten Bereich überlappt oder von ihm umfasst ist,
wobei der vom ersten Schwingenteil in Normalenrichtung überdeckte Bereich mit dem vom zweiten Schwingenteil in Normalenrichtung überdeckten Bereich überlappt oder von ihm umfasst ist,

7. Antriebsanordnung (10) nach einem der vorangegangenen Ansprüche,
**dadurch gekennzeichnet, dass**
das erste Schwingenteil von einer, , Drehmomentstütze (85) abgestützt ist, welche das erste Schwingenteil in dem vom zweiten Schwingenteil in axialer Richtung überdeckten Bereich berührt und abstützt,

8. Antriebsanordnung (10) nach einem der vorangegangenen Ansprüche,
**dadurch gekennzeichnet, dass**
**das erste Schwingenteil** eine obere Platte (75) und eine zur oberen Platte (75) parallel ausgerichtete, von der oberen Platte (75) beabstandete, untere Platte (78) aufweist,
wobei eine Tragplatte (77) zwischen der oberen und der unteren Platte (78) angeordnet ist und die Tragplatte (77) mit der oberen und der unteren Platte (78) verbunden, ist,
wobei Frontplatten (76, 82, 84) und/oder Stege (79, 83) jeweils mit der oberen Platte, der unteren Platte (78) und der Tragplatte (77) verbunden, , sind.

9. Antriebsanordnung (10) nach einem der vorangegangenen Ansprüche,
**dadurch gekennzeichnet, dass**
das erste Schwingenteil einen Hohlraum aufweist, welcher mit Getriebeöl zumindest teilweise befüllt ist, wobei eine Ölleitung vom Hohlraum zum Innenraum des Getriebes (22, 72),
wobei die Plattenteile als Wärmesperre ausgebildet sind,

10. Antriebsanordnung (10) nach einem der vorangegangenen Ansprüche,
**dadurch gekennzeichnet, dass**
**das zweite Schwingenteil** eine obere Platte (80) und eine zur oberen Platte (80) parallel ausgerichtete, von der oberen Platte beabstandete, untere Platte (81) aufweist,
wobei eine Tragplatte (77) zwischen der oberen und der unteren Platte angeordnet ist und die Tragplatte (77) mit der oberen und der unteren Platte verbunden, , ist,

11. Fördereinrichtung, welche die Antriebsanordnung (10) nach einem der vorangegangenen Ansprüche umfasst.

## Claims

1. Drive assembly (10),
wherein the drive assembly (10) comprises a gearing (22, 72), an electric motor (32) and a motor rocker arm,
wherein the gearing (22, 72) is driven by the motor directly or by way of a clutch (91),
wherein the motor rocker arm comprises a first and a second rocker arm part,
wherein the gearing (22, 72) is fastened to the first rocker arm part,
wherein the motor (32) and the clutch (91) are fastened to the second rocker arm part, **characterised in that** pairs of plate parts are arranged between the first and the second rocker arm part,
wherein the first plate part of each pair is connected to the first rocker arm part, the second plate part of each pair is connected to the second rocker arm part, and the respective top surfaces of each first plate part of each pair facing the respective second plate part of each pair are located in a shared plane.

2. Drive assembly (10) according to claim 1,
**characterised in that**
the top surfaces of each plate part, which surfaces are located in the plane, are machined together by a milling tool.

3. Drive assembly (10) according to any of the preceding claims,
**characterised in that**
a connection means, such as a threaded rod, a screw or the like, protrudes through a cut-out extending through the pair such that a nut and a screw head or a further nut press the two rocker arm parts onto the relevant pair,
and/or **in that**
the plate parts are each formed
- in a cuboidal manner to form a plane that can be machined by a milling tool, or
- in a cuneiform manner so that the height can be adjusted by displacing the two rocker arm parts relative to one another in a planar manner.

4. Drive assembly (10) according to any of the preceding claims,
**characterised in that**
the plate parts act as damping elements for damping vibrations,
wherein each plate part consists of a stack of individual sheets coated with a resilient material.

5. Drive assembly (10) according to any of the preceding claims,
**characterised in that**
the plate parts act as electrical insulators, wherein the plate parts electrically insulate the first rocker arm part from the second rocker arm part.

6. Drive assembly (10) according to any of the preceding claims,
**characterised in that**
the region covered by the first rocker arm part in the axial direction overlaps or is encompassed by the region covered by the second rocker arm part in the axial direction, wherein the region covered by the first rocker arm part in the normal direction overlaps or is encompassed by the region covered by the second rocker arm part in the normal direction.

7. Drive assembly (10) according to any of the preceding claims,
**characterised in that**
the first rocker arm part is supported by a torque bracket (85), which touches and supports the first rocker arm part in the region covered by the second rocker arm part in the axial direction.

8. Drive assembly (10) according to any of the preceding claims,
**characterised in that**
the first rocker arm part comprises an upper plate (75) and a lower plate (78), which is oriented in parallel with the upper plate (75) and spaced apart from the upper plate (75),
wherein a supporting plate (77) is arranged between the upper plate and the lower plate (78), and the supporting plate (77) is connected to both the upper plate and the lower plate (78),
wherein front plates (76, 82, 84) and/or ribs (79, 83) are each connected to the upper plate, to the lower plate (78) and to the supporting plate (77).

9. Drive assembly (10) according to any of the preceding claims,
**characterised in that**
the first rocker arm part comprises a cavity that is filled with gear oil at least in part, wherein an oil line runs from the cavity to the interior of the gearing (22, 72),
wherein the plate parts are configured as a thermal barrier.

10. Drive assembly (10) according to any of the preceding claims,
**characterised in that**
the second rocker arm part comprises an upper plate (80) and a lower plate (81), which is oriented in parallel with the upper plate (80) and spaced apart from the upper plate,
wherein a supporting plate (77) is arranged between the upper plate and the lower plate, and the supporting plate (77) is connected to both the upper plate and the lower plate.

11. Conveyor device comprising the drive assembly (10) according to any of the preceding claims.

## Revendications

1. Système d'entraînement (10),
lequel système d'entraînement (10) comprend une transmission (22, 72), un moteur électrique (32) et un bras oscillant de moteur,
la transmission (22, 72) étant entraînée par le moteur, directement ou par l'intermédiaire d'un accouplement (91),
le bras oscillant de moteur comportant des première et seconde parties,
ladite transmission (22, 72) étant fixée sur la première partie du bras oscillant,
ledit moteur (32) et ledit accouplement (91) étant fixés sur la seconde partie dudit bras oscillant,
**caractérisé par le fait que**
des paires de pièces du type platine sont interposées entre les première et seconde parties du bras oscillant,
sachant que la première pièce du type platine de la paire considérée est reliée à la première partie du bras oscillant, et que la seconde pièce du type platine de ladite paire considérée est reliée à la seconde partie dudit bras oscillant,
la surface de la première pièce respective du type platine de la paire considérée, qui pointe vers la seconde pièce respective du type platine de ladite paire considérée, étant située dans un plan commun.

2. Système d'entraînement (10) selon la revendication 1,
**caractérisé par le fait que**
les surfaces de la pièce considérée du type platine, situées dans le plan, sont usinées conjointement au moyen d'un outil de fraisage.

3. Système d'entraînement (10) selon l'une des revendications précédentes, **caractérisé par le fait**
**qu'**un moyen de liaison, tel qu'une tige filetée, une vis ou un élément similaire, franchit un évidement traversant intégralement la paire, de façon telle qu'un écrou et une tête de vis, voire un écrou additionnel, pressent les deux parties du bras oscillant sur la paire considérée ;
et/ou par le fait que
les pièces du type platine présentent respectivement
- une configuration rectangulaire, en vue de former un plan usiné par un outil de fraisage, ou
- une configuration cunéiforme, en vue du réglage en hauteur par déplacement relatif des deux parties du bras oscillant, l'une par rapport à l'autre dans un plan.

4. Système d'entraînement (10) selon l'une des revendications précédentes, **caractérisé par le fait que**
les pièces du type platine remplissent la fonction d'éléments amortisseurs conçus pour amortir des vibrations,
chacune desdites pièces du type platine étant constituée d'un empilement de tôles individuelles revêtues d'un matériau élastique.

5. Système d'entraînement (10) selon l'une des revendications précédentes, **caractérisé par le fait que**
les pièces du type platine remplissent la fonction d'isolateurs électriques, lesdites pièces du type platine assurant l'isolation électrique de la première partie du bras oscillant vis-àvis de la seconde partie.

6. Système d'entraînement (10) selon l'une des revendications précédentes, **caractérisé par le fait que**
la région couverte par la première partie du bras oscillant, dans la direction axiale, est en chevauchement avec la région couverte par la seconde partie dudit bras oscillant dans la direction axiale, ou est entourée par ladite région,
sachant que la région couverte par la première partie du bras oscillant, dans la direction normale, est en chevauchement avec la région couverte par la seconde partie dudit bras oscillant dans la direction normale, ou est entourée par ladite région.

7. Système d'entraînement (10) selon l'une des revendications précédentes, **caractérisé par le fait**
**qu'**un appui est procuré à la première partie du bras oscillant par un support (85) de couple de rotation qui est en contact avec ladite première partie du bras oscillant, à laquelle il confère un appui, dans la région couverte par la seconde partie dudit bras oscillant dans la direction axiale.

8. Système d'entraînement (10) selon l'une des revendications précédentes, **caractérisé par le fait que**
la première partie du bras oscillant comporte une platine supérieure (75) et une platine inférieure (78) orientée parallèlement à la platine supérieure (75) et située à distance de ladite platine supérieure (75),
une platine de support (77) étant interposée entre les platines supérieure et inférieure (78), laquelle platine de support (77) est reliée auxdites platines supérieure et inférieure (78), sachant que des platines frontales (76, 82, 84) et/ou des membrures d'entretoisement (79, 83) sont reliées, à chaque fois, à la platine supérieure, à la platine inférieure (78) et à la platine de support (77).

9. Système d'entraînement (10) selon l'une des revendications précédentes, **caractérisé par le fait que**
la première partie du bras oscillant est munie d'une cavité au moins partiellement emplie d'huile de la transmission, un conduit d'huile menant à l'espace interne de ladite transmission (22, 72) à partir de ladite cavité,
sachant que les pièces du type platine sont réalisées en tant que barrière thermique.

10. Système d'entraînement (10) selon l'une des revendications précédentes, **caractérisé par le fait que**
la seconde partie du bras oscillant comporte une platine supérieure (80) et une platine inférieure (81) orientée parallèlement à la platine supérieure (80) et située à distance de ladite platine supérieure,
une platine de support (77) étant interposée entre les platines supérieure et inférieure, laquelle platine de support (77) est reliée auxdites platines supérieure et inférieure.

11. Dispositif de convoyage incluant un système d'entraînement (10) conforme à l'une des revendications précédentes.
